# EUROPÄISCHE PATENTSCHRIFT

(11) **EP 4 722 677 B1**
(45) Veröffentlichungstag und Bekanntmachung des Hinweises auf die Patenterteilung: **07.10.2026**
(21) Anmeldenummer: 25205166.9
(22) Anmeldetag: 29.09.2025
(51) Int. Cl.: G01M 5/00

(54) **VERSCHLEISSINDIKATORELEMENT UND VERSCHLEISSINDIKATORANORDNUNG**
WEAR INDICATOR ELEMENT AND WEAR INDICATOR ARRANGEMENT
ELÉMENT INDICATEUR D'USURE ET DISPOSITIF INDICATEUR D'USURE

(30) Priorität: 01.10.2024 DE 102024128323
(43) Veröffentlichungstag der Anmeldung: 08.04.2026
(73) Patentinhaber: ZÖLLER-KIPPER GMBH, 55130 Mainz (DE); FAUN Umwelttechnik GmbH & Co. KG, 27711 Osterholz-Scharmbeck (DE)
(72) Erfinder: Coulmont, Philippe, 07130 Soyons (FR); Czyzewicz, Jacek, 80-260 Gdansk (PL)
(74) Vertreter: Regler, Markus Egid

(56) Entgegenhaltungen:
- EP-A1- 4 245 621
- DE-B1- 2 536 581
- US-A1- 2003 209 052

## Beschreibung

Die Erfindung betrifft ein Verschleißindikatorelement mit den Merkmalen des Patentanspruchs 1 sowie eine Verschleißindikatoranordnung mit den Merkmalen des Patentanspruchs 10.

Bewegliche Bauteile sind im täglichen Betrieb in Fahrzeugen oder Maschinen dem Verschleiß durch Abrieb der Oberfläche ausgesetzt. Werden die betroffenen Bauteile nicht rechtzeitig ausgetauscht, sind die Fahrzeuge oder Maschinen in ihrer Funktion eingeschränkt oder es kommt zu - teilweise irreparablen - Defekten. Es ist also vorteilhaft, die Verschleißbauteile rechtzeitig auszutauschen, bevor eine übermäßige Abnutzung eintritt. Gleichzeitig sollen Fahrzeuge und Maschinen möglichst lange Betriebszeiten zwischen zwei Wartungszeitpunkten haben. Es ist also wünschenswert, den optimalen Zeitpunkt zum Austausch von Verschleißbauteilen zu ermitteln.

In der DE 20 2018 100 481 U1 ist ein Verschleißindikator für abrasiv beanspruchte Blechkonstruktionen offenbart. In den Blechkonstruktionen ist ein Füllkörper angeordnet, in den ein elektrischer Leiter angeordnet ist. Der Füllkörper wird zusammen mit der Blechkonstruktion verschlissen. Sobald der Verschleiß den Leiter erreicht, wird ein Stromsignal unterbrochen, was den Hinweis gibt, dass die Verschleißgrenze erreicht ist und das Bauteil ausgetauscht werden muss.

Nachteilig an diesem Konzept ist insbesondere der Herstellungsaufwand mit dem Einbringen des Füllkörpers in die Blechkonstruktion und der durch die elektrischen Verbindungen notwendige Aufwand beim Austausch der Blechkonstruktion.

In der DE 25 36 581 B1 ist eine elektronische Anzeigevorrichtung zur Verschleißüberwachung eines relativ zu einem feststehenden Teil gleitend beweglichen Teils offenbart, mit einem Permanentmagneten, der in der Wand des beweglichen Teils hinter einer dem zulässigen Verschleißmaß entsprechenden Schicht aus magnetisierbarem Werkstoff angeordnet ist, wobei der Permanentmagnet bei einem durch Verschleiß erfolgenden Freiwerden mit einer im feststehenden Teil angeordneten, ihm gegenüberliegenden Induktionsspule zur Erzeugung eines Schaltsignals zusammenwirkt.

Zudem ist zu berücksichtigen, dass gerade im Bereich von Nutzfahrzeugen, insbesondere Abfallsammelfahrzeugen, die Arbeitsumgebung sehr zerstörerisch ist, so dass ein entsprechender Verschleißindikator auch robust gegenüber den Einflüssen von Schmutz, Abfall, korrosiven Flüssigkeiten und dergleichen ist.

Es ist daher die Aufgabe der vorliegenden Erfindung, ein Verschleißindikatorelement und eine Verschleißindikatoranordnung vorzuschlagen, die robust sowie einfach herzustellen und zu verbauen sind.

Diese Aufgabe wird gelöst durch ein Verschleißindikatorelement mit den Merkmalen des Patentanspruchs 1 und einer Verschleißindikatoranordnung mit den Merkmalen des Patentanspruchs 10. Vorteilhafte Weiterbildungen der Erfindung sind Gegenstand der jeweiligen abhängigen Ansprüche.

Die Erfindung betrifft ein Verschleißindikatorelement mit einem ersten Ende, auf das eine Verschleißkraft wirkt, und einem dem gegenüberliegenden zweiten Ende, aufweisend einen Rahmen mit einem Innenraum, wobei in dem Innenraum ein Magnetträger angeordnet ist, der über einen Sollbruchabschnitt mit dem ersten Ende verbunden ist, und wobei in dem Innenraum ein Federhalter angeordnet ist und zwischen dem Federhalter und dem Magnetträger ein Federelement angeordnet ist, das sich bei intaktem Sollbruchabschnitt in einem vorgespannten Zustand befindet.

Der Rahmen ist hier nicht nur zweidimensional zu verstehen sondern umfasst insbesondere einen Boden, eine Decke und diese verbindende Seitenwände. In dem dadurch gebildeten Innenraum sind die übrigen Bestandteile des Verschleißindikatorelements angeordnet. Dabei müssen Decke beziehungsweise Boden nicht unbedingt den gesamten Innenraum abdecken.

Der Magnetträger weist eine Magnetaufnahme auf, in die ein Magnet insbesondere form-, kraft- oder reibschlüssig eingesetzt werden kann.

Der Magnetträger ist nur über den Sollbruchabschnitt einstückig, materialeinheitlich mit dem Rest des Indikatorelements verbunden, so dass er bei einem Bruch des Sollbruchabschnitts demgegenüber frei beweglich ist.

Das Verschleißindikatorelement ist im Einbauzustand so angeordnet, dass die Verschleißkraft auf das erste Ende wirkt. Dieses wird nach und nach abgeschliffen, bis der Sollbruchabschnitt erreicht ist. Dann bricht der Sollbruchabschnitt und der Magnetträger ist freibeweglich gegenüber den übrigen Komponenten des Verschleißindikatorelements.

Die Federkraft des Federelements, beispielsweise eine Spiralfeder oder ein Gummielement, das sich beim Brechen des Sollbruchabschnitts entspannt, bewegt dann den Magnetträger aus seiner ursprünglichen Position, was durch einen untenstehend im Rahmen der Verschleißindikatoranordnung erläuterten Sensor registriert werden kann.

Das Federelement ist vorteilhafterweise nicht mit dem Federhalter oder dem Magnetträger verbunden, sondern lediglich in vorgespanntem Zustand dazwischen eingeklemmt, was die Herstellung vereinfacht.

Dieses Verschleißindikatorelement ist einfach in seiner Funktionalität und kann platzsparend an oder in einem beliebigen Verschleißbauteil angeordnet werden. Der zugrundeliegende Mechanismus ist einfach, verlässlich und robust.

In einer vorteilhaften Ausbildung der Erfindung entspricht die Breite des Rahmens zwischen dem ersten Ende und dem Sollbruchabschnitt der Verschleißtiefe. Unter der Verschleißtiefe ist die Dicke der Schicht an der Oberfläche des Verschleißbauteils gemeint, bis zu der ein Abrieb der Oberfläche zulässig ist, bis das Verschleißbauteil ersetzt werden muss. Sobald eine Schicht an der Oberfläche des Verschleißbauteils abgerieben ist, deren Dicke der Verschleißtiefe entspricht, wird dies dem Bediener mitgeteilt.

Die Verschleißtiefe ist abhängig vom Verschleißbauteil und dessen Einsatzort. Ein erfindungsgemäßes Verschleißindikatorelement kann ein einfacher Weise auf diese Randbedingungen angepasst werden, indem es mit einem Rahmen mit der passenden Breite gefertigt wird. Die Breite des Rahmens entspricht dann der vorgesehenen Verschleißtiefe des Bauteils. Vorzugsweise betrifft dies eine Seitenwand des Rahmens.

In einer vorteilhaften Ausgestaltung der Erfindung ist vorgesehen, dass der Federhalter zwei Leitelemente aufweist, zwischen denen das Federelement angeordnet ist und die sich in einer Richtung von dem ersten Ende zu dem zweiten Ende erstrecken. Damit ist das Federelement in gespanntem Zustand an seinem vorgesehenen Ort gehalten und kann während des Entspannungsvorgangs nicht ausweichen, so dass die Federkraft in die vorgesehene Richtung zum zweiten Ende hin wirken kann.

Vorzugsweise erstrecken sich Leitelemente zwischen Sollbruchabschnitt und der Magnetaufnahme.

In einer weiteren Ausgestaltung der Erfindung weist der Magnetträger zumindest einen Arm auf, der mit einem ersten Ende mit dem Sollbruchabschnitt verbunden ist und mit einem zweiten Ende mit einer Magnetaufnahme des Magnetträgers verbunden ist. Damit kann die konstruktive Ausgestaltung des Verschleißindikatorelements an die jeweiligen bauräumlichen Gegebenheiten angepasst werden.

Besonders bevorzugt ist vorgesehen, dass der oder die Arme den Federhalter umfassen. Sind insbesondere zwei Arme vorgesehen, umfassen sie den Federhalter ringförmig. Damit können die einzelnen Komponenten des Verschleißindikatorelements platzsparend und optimal für ihre jeweilige Funktionalität angeordnet werden.

Eine weitere bevorzugte Ausgestaltung der Erfindung sieht vor, dass der Federhalter und der Magnethalter jeweils ein Widerlager aufweisen, an denen das Federelement angeordnet ist. Das vorgespannte Federelement stützt sich an den Widerlagern ab und wird dadurch in Richtung zwischen erstem und zweitem Ende an seinem vorgesehenen Ort gehalten.

Die Widerlager können so ausgebildet sein, dass das Einklemmen des Federelements dazwischen begünstigt wird. Beispielsweise können Vorsprünge oder Nuten ausgebildet sein, mit denen das Federelement zusammenwirkt.

Das Widerlager des Federhalters ist vorzugsweise zwischen der Führungselementen angeordnet. Dadurch bildet das Widerlager zusammen mit den Führungselementen in der Ebene der Seitenwände eine Führung für das Federelement. Senkrecht dazu wirken der Boden und der Deckel eine Begrenzung für des Federelement.

Das zwischen den Führungselementen angeordnete Widerlager kann auch einen Anschlag für die Arme bilden, wenn sich der Magnetträger nach dem Bruch des Sollbruchabschnitts frei bewegt, und somit die freie Bewegung des Magnetträgers begrenzen.

Das Widerlager des Magnetträgers ist vorzugsweise an der Magnetaufnahme angeordnet oder an dieser ausgebildet.

Eine weitere Ausgestaltung der Erfindung sieht vor, dass der Rahmen, der Magnetträger und der Federhalter materialeinheitlich, einstückig gefertigt sind. Der Rahmen umfasst dabei insbesondere einen Boden, Decke und Seitenwände. Insbesondere ist der Magnetträger über den Sollbruchabschnitt mit einer Seitenwand entsprechend verbunden. Der Federhalter ist insbesondere mit dem Boden entsprechend verbunden.

Besonders bevorzugt erfolgt die Herstellung mit einem additiven Fertigungsverfahren.

Das Verschleißindikatorelement ist insbesondere bevorzugt aus einem Kunststoffmaterial hergestellt.

In einem Verfahren zur Herstellung eines erfindungsgemäßen Verschleißindikatorelements, wird dieses mit einem additiven Fertigungsverfahren materialeinheitlich, einstückig hergestellt. Dabei wird an der Position, wo sich später das Federelement befindet, ein Ersatzelement vorgesehen. Das Ersatzelement erstreckt sich vom Federhalter, insbesondere von dessen Widerlager, zu dem Magnetträger, insbesondere der Magnetaufnahme. Dieses Ersatzelement wird nach Fertigstellung des Verschleißindikatorelements aus diesem herausgelöst, beispielsweise herausgebrochen. Dann wird das vorgespannte Federelement zwischen dem Federhalter und dem Magnetträger eingesetzt.

Vorteilhafterweise erhält man so ein stabiles und robustes Verschleißindikatorelement.

Eine weitere bevorzugte Ausgestaltung der Erfindung sieht vor, dass der Innenraum einen Aufnahmeraum aufweist, in den der Magnetträger bei zerstörtem Sollbruchabschnitt bewegbar ist. Der Aufnahmeraum ist insbesondere von den Seitenwänden umgeben beziehungsweise wird durch diese gebildet. Das führt zu einer definierten Bewegung des Magnetträgers, der nach dem Bruch des Sollbruchabschnitts an einer vorgesehenen Position zur Ruhe kommt.

Besonders bevorzugt ist der Magnetträger durch die Federkraft des Federelements bewegbar.

Weiterhin bevorzugt ist vorgesehen, dass der Aufnahmeraum Führungselemente aufweist, die mit komplementären Ausformungen eines freien Endes des Magnetträgers zusammenwirken, so dass dieser an die vorgesehene Position im Aufnahmeraum bewegbar ist.

Dadurch wird die Führung des Magnetträgers weiter verbessert und ein Verrutschen oder Verklemmen vermieden, so dass wie nachstehend beschrieben ein Sensor ein eindeutiges Messignal erhält. Die Führungselemente sind an den Seitenwänden ausgebildet. Sie müssen nicht über den vollen Umfang des freien Endes des Magnetträgers ausgebildet sein. Die Führungselemente können Vorsprünge in den Seitenwänden sein. Es ist auch möglich, dass an dem zweiten Ende des Verschleißindikatorelements keine Seitenwand ausgebildet ist und die Führungselemente an den freien Enden der Seitenwände ausgebildet sind.

Das freie Ende des Magnetträgers kann beispielsweise spitz zulaufend ausgebildet sein, was die Führung der Bewegung des Magnetträgers weiter unterstützt.

Die Erfindung betrifft weiterhin eine Verschleißindikatoranordnung mit einem Verschleißbauteil, das eine Tasche aufweist, in der ein Verschleißindikatorelement wie vorliegend beschrieben angeordnet ist, so dass dessen erstes Ende in oder an der Verschleißfläche des Verschleißbauteils angeordnet ist, sowie einem nahe dem Verschleißindikatorelement angeordneten Magnetfeldsensor.

Bei dem Verschleißbauteil kann es sich um ein beliebiges Bauteil handeln, das Verschleiß ausgesetzt ist. Bei der Verschleißfläche handelt es sich um den Teil des Verschleißbauteils oder den Teil seiner Oberfläche, die den Verschleißkräften ausgesetzt ist. Die Tasche kann bereits bei dessen Herstellung in das Bauteil eingebracht werden. Sie kann auch nachträglich im Rahmen einer Nachrüstung in das Bauteil eingebracht werden.

Die Tasche kann an einer Seitenfläche das Verschleißbauteils aber auch in dessen Vollmaterial ausgebildet sein. Es kann auch vorgesehen sein, dass die Tasche aus einem Durchbruch in dem Verschleißbauteil gebildet ist, wenn dieses eine entsprechend geringe Dicke aufweist.

Sowohl das Verschleißindikatorelement als auch die Tasche können zueinander komplementäre Nuten, Sicken und andere Vertiefungen oder Vorsprünge aufweisen, um das Verschleißindikatorelement in der Tasche zu führen.

Es können in dem Verschleißbauteil mehrere Taschen, insbesondere in verschiedene Richtungen ausgerichtete Taschen, ausgebildet sein, um inhomogenen oder richtungsabhängigen Verschleiß zu erfassen. Dabei können auch jeweils unterschiedliche Verschleißtiefen berücksichtig werden.

Weiterhin kann vorgesehen sein, dass die Tasche zumindest abschnittsweise den Innenraum des Verschleißindikatorelements abdeckt. Dann kann in diesem Bereich auf die Ausbildung von Boden und/oder Deckel verzichtet werden, was die Herstellung des Verschleißindikatorelements beschleunigt.

Der Magnetfeldsensor ist nahe dem Verschleißindikatorelement angeordnet, so dass der Erfassungsbereich des Magnetfeldsensors entweder die Magnetaufnahme des Verschleißindikatorelements an ihrer ursprünglichen Position oder den Aufnahmeraum des Verschleißindikatorelements erfasst. In erstem Fall gibt der Sensor ein dauerhaftes Signal aus, solange die Verschleißtiefe nicht erreicht ist. Sobald der Abrieb die vorgesehene Tiefe erreicht, bricht der Sollbruchabschnitt und der Magnet wird mit dem Magnetträger aus dem Erfassungsbereich des Sensors befördert, der daraufhin kein Signal mehr ausgibt. Die Steuerung des Fahrzeugs oder der Maschine erkennt daran, dass die vorgesehene Verschleißtiefe erreicht ist und gibt eine Meldung an die Bedienperson heraus, dass ein Austausch des Verschleißbauteils notwendig ist. Auch weitere Maßnahmen wie zum Beispiel das Stoppen des Fahrzeugs oder der Maschine können damit gekoppelt werden.

Erfasst der Sensor den Aufnahmeraum ist der Wirkungsmechanismus umgekehrt. Dann gibt der Sensor im Normalzustand kein Signal heraus. Erst wenn die vorgesehene Verschleißtiefe erreicht ist, wird ein Signal erzeugt, was wiederum eine Steuerung anspricht.

Vorzugsweise ist vorgesehen, dass sich der Magnetträger im Erfassungsbereich des Magnetfeldsensors befindet. Dies bietet den zusätzlichen Vorteil, dass auch andere Fehler in der Verschleißindikatoranordnung bemerkt werden können, wie zum Beispiel defekte Kabel oder Steckerverbindungen oder ein nicht vorgesehener Bruch an dem Magnetträger oder dem Federelement. Auch dann erhält die Steuerung kein Signal mehr, was also grundlegend auf einen Fehler hindeutet.

Bevorzugt ist das erste Ende des Verschleißindikatorelements im Wesentlichen plan mit der Verschleißfläche angeordnet ist. Dann ist sichergestellt, dass die Verschleißfläche und das Verschleißindikatorelement gleichmäßig abgerieben werden und der Austausch des Verschleißbauteils bei der vorgesehenen Verschleißtiefe vorgenommen werden kann.

In einer vorteilhaften Weiterbildung ist vorgesehen, dass das Verschleißbauteil einen Kern aus einem metallischen Material aufweist der zumindest abschnittsweise von einem Verschleißmaterial umgeben ist.

Das Verschleißmaterial kann etwa nur dort vorgesehen sein, wo es zu Verschleiß kommt oder wo besondere Eigenschaften, etwa Gleiteigenschaften, des Verschleißmaterials erforderlich sind. Damit kann Material anhand der Erforderlichkeiten eingesetzt werden. Zudem wird die Wartung erleichtert, weil nicht des gesamte Verschleißbauteil sondern nur ein Teil davon ersetzt werden muss. Auch der Materialeinsatz wird reduziert.

Die Tasche ist insbesondere in dem Verschleißmaterial ausgebildet.

Gemäß einer weiteren Ausgestaltung der Erfindung ist der Magnetfeldsensor in einem weiteren, mit dem Verschleißbauteil zusammenwirkenden Bauteil angeordnet. Unter Zusammenwirken wird verstanden, dass das Bauteil und das Verschleißbauteil sich in einer festen räumlichen Beziehung zueinander befinden oder beweglich oder unbeweglich zueinander miteinander verbunden sind.

Vorteilhafterweise handelt es sich bei dem Bauteil um kein Austauschteil, so dass es in der Maschine oder dem Fahrzeug dauerhaft verbleibt. Damit ist zum einen der Vorteil verbunden, dass der Sensor geschützt vor Umgebungseinflüssen wie Schmutz, Abfall oder korrosiven Flüssigkeiten verbaut ist. Zum anderen kann der Sensor dauerhaft an Ort und Stelle verbleiben, während lediglich das Verschleißindikatorelement zusammen mit dem Verschleißbauteil ausgetauscht wird.

Der Magnetfeldsensor ist bevorzugt in einer Bohrung in dem Bauteil eingesetzt. Von dort aus kann eine weiterführende Durchgangsbohrung durch das Bauteil führen, in der die Kabel des Magnetfeldsensors geführt sind.

Der Magnetfeldsensor kann von einer Gummihülle umgeben sein, um den Sensor in der Bohrung zu halten und/oder um die dem Verschleißindikatorelement zugewandte Öffnung der Bohrung zu verschließen. Die Hülle schützt den Sensor zusätzlich.

In einer bevorzugten Ausgestaltung der Erfindung ist das Verschleißbauteil ein Gleitblock und das weitere Bauteil eine mit dem Gleitblock verbundene Welle. Ein Gleitblock wird in einer Schiene oder Ähnlichem geführt, um die Bewegung einer damit verbundenen Maschinen- oder Fahrzeugkomponente zu leiten. Die Gleitbewegung in der Schiene führt dazu, dass die Oberfläche des Gleitblocks abgerieben wird. Die Welle, die ein Teil einer Maschinen- oder Fahrzeugkomponente ist, ist aus einem robusten metallischen Material wie Stahl gefertigt und ist üblicherweise in einer Ausnehmung des Gleitblocks angeordnet. Die Bohrung für den Magnetfeldsensor befindet sich in der dem Gleitblock zugewandten Stirnseite der Welle. Dadurch bietet sie optimalen Schutz für den Magnetfeldsensor in ihrem Inneren, der von den Umgebungseinflüssen vollständig abgeschirmt ist. Gleichzeitig befindet sich der Sensor nach bei dem Verschleißindikatorelement.

Weitere Merkmale der Erfindung ergeben sich aus den nachstehenden beschriebenen Figuren.

Dabei zeigen:
- Figur 1: das Heckteil eines Abfallsammelfahrzeuges mit einer erfindungsgemäßen Verschleißindikatoranordnung,
- Figur 2: einen Ausschnitt des Heckteils von Figur 1,
- Figur 3: einen Ausschnitt des Heckteils von Figur 1 in einer Schnittdarstellung,
- Figur 4: eine Verschleißindikatoranordnung,
- Figur 5: eine Verschleißindikatoranordnung in einer Schnittdarstellung,
- Figur 6: ein Verschleißindikatorelement in einer perspektivischen Darstellung,
- Figur 7: ein Verschleißindikatorelement in einer Schnittdarstellung,
- Figur 8: ein Verschleißindikatorelement in einer weiteren Schnittdarstellung.

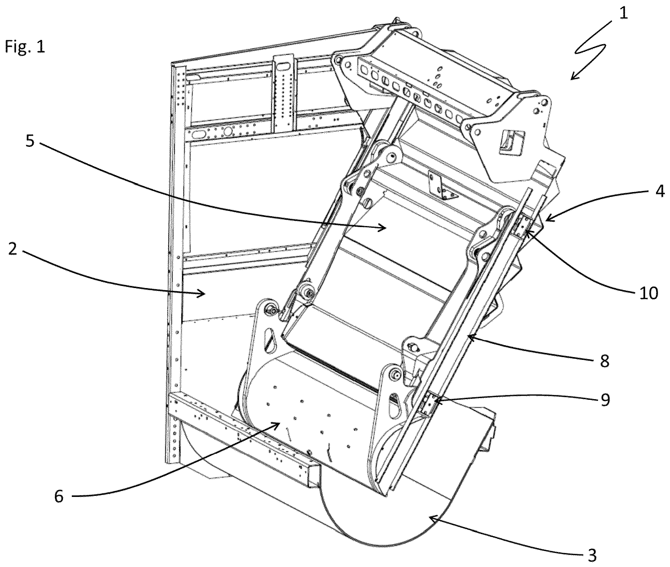

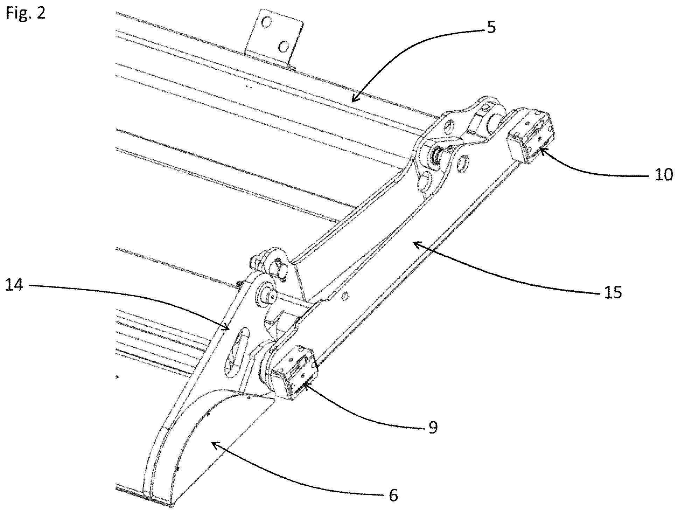

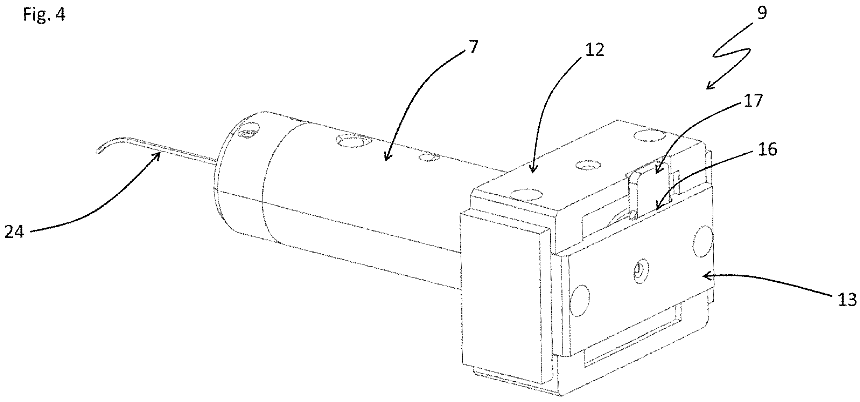

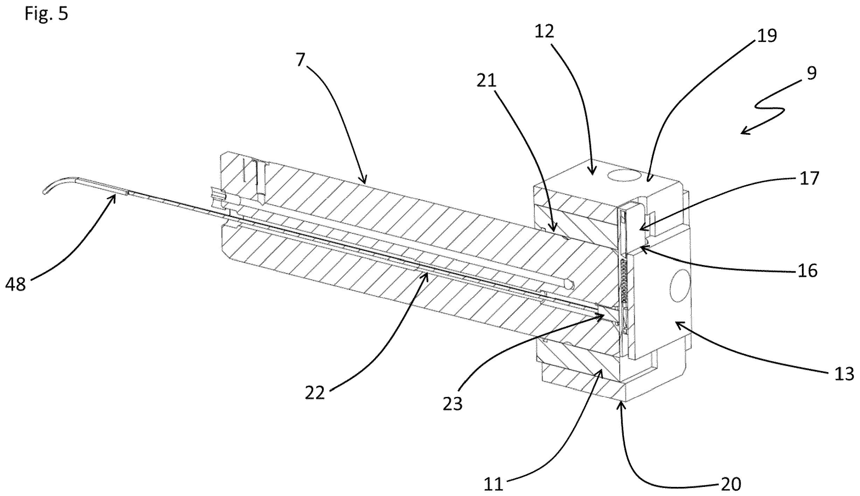

Die in den Figuren dargestellte Ausführung der Erfindung ist in einem Heckteil 1 eines ansonsten nicht näher dargestellten Abfallsammelfahrzeugs eingebaut (Figuren 1 bis 5). Das Heckteil 1 ist an dem Sammelraum des Abfallsammelfahrzeugs angeordnet. Der Abfall wird durch die Einschüttöffnung 2 in die Ladewanne 3 des Heckteils 1 geladen. Mittels eines Kompaktierungsmechanismus 4 wird der Abfall gepresst und in den Sammelraum befördert.

Der Kompaktierungsmechanismus 4 weist eine Trägerplatte 5 und eine Pressplatte 6 auf. Die schaufelartig geformte Pressplatte 6 ist mit einer Welle 7 gelenkig an der Trägerplatte 5 befestigt. Die Trägerplatte 5 selbst ist entlang einer Gleitschiene 8 linear beweglich. Zum Verdichten und Befördern des Abfalls wird die Trägerplatte 5 nach unten in Richtung der Ladewanne 3 bewegt. Die Pressplatte 6 ist dabei nach oben geklappt. Dann klappt die Pressplatte 6 nach unten, greift in die Ladewanne 3 und umschließt den Abfall. Danach wird die Trägerplatte 5 wieder geführt in den Gleitschienen 8 nach oben gezogen, wodurch der Abfalls von der Pressplatte 6 in den Sammelraum befördert und gegen die dort angeordnete Ausschubplatte beziehungsweise den dort bereits vorhandenen Abfall gepresst und komprimiert wird.

Die Klappbewegung wird über eine gelenkige Verbindung zwischen Trägerplatte 5 und Pressplatte 6 ermöglicht. Die beiden Bauteile sind rechts und links über eine Welle 7 miteinander verbunden. Die Pressplatte weist zudem ein Tragelement 14, das von der Welle 7 durchdrungen wird und an dem der hydraulische Antrieb angreift.

Dieser Verdichtungszyklus wird stetig wiederholt, entweder nach einer vorgegebenen Anzahl von Entleervorgängen in die Ladewanne 3 oder sobald der Füllstand der Ladewanne 3 eine gewisse Höhe erreicht hat. Das bedeutet hunderte Verdichtungszyklen pro Sammelfahrt und damit eine stete Bewegung von Trägerplatte 5 und Pressplatte 6.

Die Führung der Trägerplatte 5 in den Gleitschienen 8 erfolgt über Gleitblöcke 9, 10, die als Verschleißbauteile vorgesehen sind. Die bestehen im Wesentliche aus einem metallischen Kern 11, der zumindest abschnittsweise von Verschleißmaterial 12, 13 aus Kunststoff mit niedrigem Reibungskoeffizienten umgeben ist, so dass sich die Gleitblöcke 9, 10 ohne zu Verklemmen in den Gleitschienen 8 bewegen können. Die Gleitblöcke 9, 10 sind an einem Träger 15 befestigt.

Im Laufe der Zeit wird das Verschleißmaterial 12, 13 abgerieben. Ist dieser Abrieb zu groß, haben die Gleitblöcke 9, 10 zu viel Spiel in den Gleitschienen 8 und die saubere Bewegung der Trägerplatte 5 ist nicht mehr gewährleistet. Im schlimmsten Falle wird die Trägerplatte 5 blockiert und verbogen und muss vollständig ausgetauscht werden.

Daher ist es notwendig, die Gleitblöcke 9, 10 regelmäßig auszutauschen oder mit neuem Verschleißmaterial 12, 13 zu versehen, damit ein reibungsloser Betrieb des Kompaktierungsmechanismus 4 gegeben ist. Um die Wartung zum bestmöglichen Zeitpunkt vorzunehmen, verfügt der Kompaktierungsmechanismus 4 über eine Verschleißindikatoranordnung.

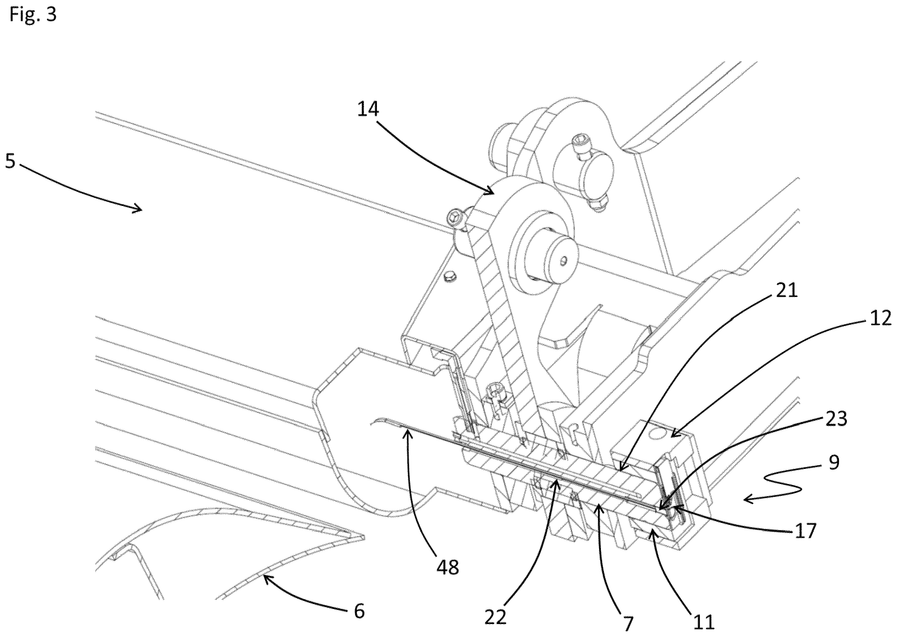

In dem der Fahrzeugaußenwand zugewandten Verschleißmaterial 13 des in Figuren 3 bis 5 näher dargestellten Gleitblocks 9 ist eine Tasche 16 ausgebildet, in der ein Verschleißindikatorelement 17, wie es nachstehend detailliert beschrieben ist, angeordnet ist. Dessen erstes Ende 18 ist plan mit der Verschleißfläche 19 des Verschleißmaterials 12, das über die Gleitschiene 8 reibt, angeordnet.

In diesem Ausführungsbeispiel wird der Verschleiß nur auf einer Seite des Gleitblocks 9 bestimmt. Der stärkste Abrieb findet auf dieser und der gegenüberliegenden Verschleißfläche 20 des Gleitblocks 9 statt, wobei davon auszugehen ist das der Abnutzungsgrad auf beiden Seiten in etwa gleich ist. Bei den übrigen Seiten ist der Verschleiß viel geringer, so dass die Verschleißflächen 19, 20 die kritischen Bereiche des Gleitblocks 9 darstellen. Wird dort der Verschleiß zu groß, ist eine Wartung durchzuführen.

Die Welle 7 greift in eine Ausnehmung 21 des Gleitblocks 9 ein. In einer Durchgangsbohrung 22 parallel zur Längsachse der Welle 7 ist an deren dem Gleitblock 9 zugewandten Ende ein Magnetfeldsensor 23 angeordnet, dessen Kabel 24 in der Durchgangsbohrung 22 geführt sind. Der Magnetfeldsensor 23 ist damit in unmittelbarer Nähe zu dem Verschleißindikatorelement 17 angeordnet.

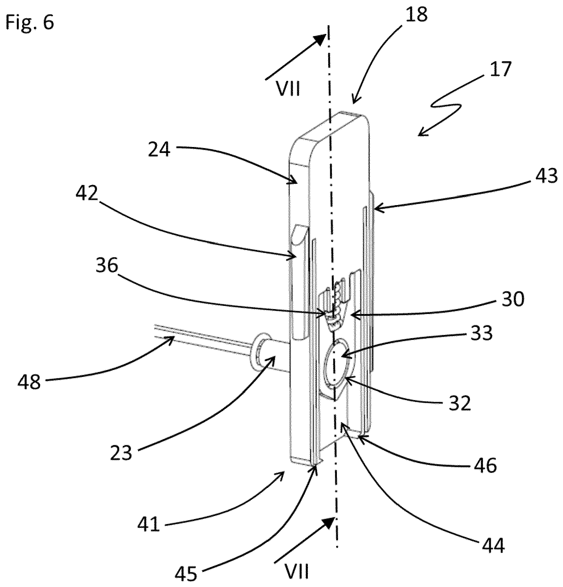

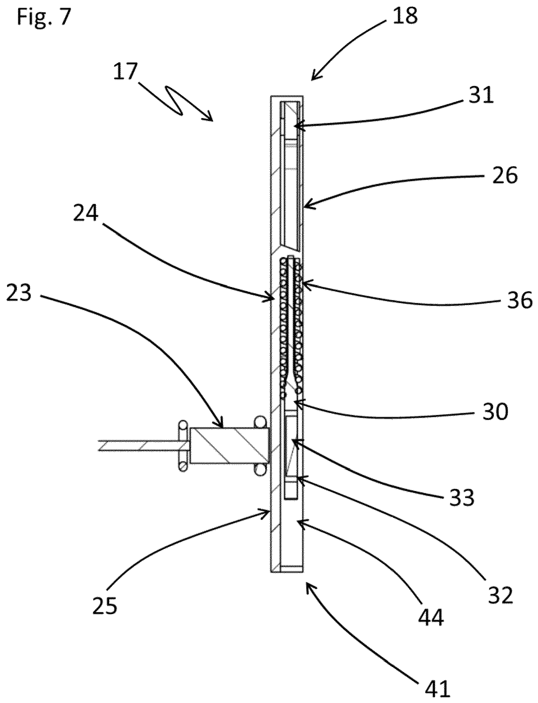

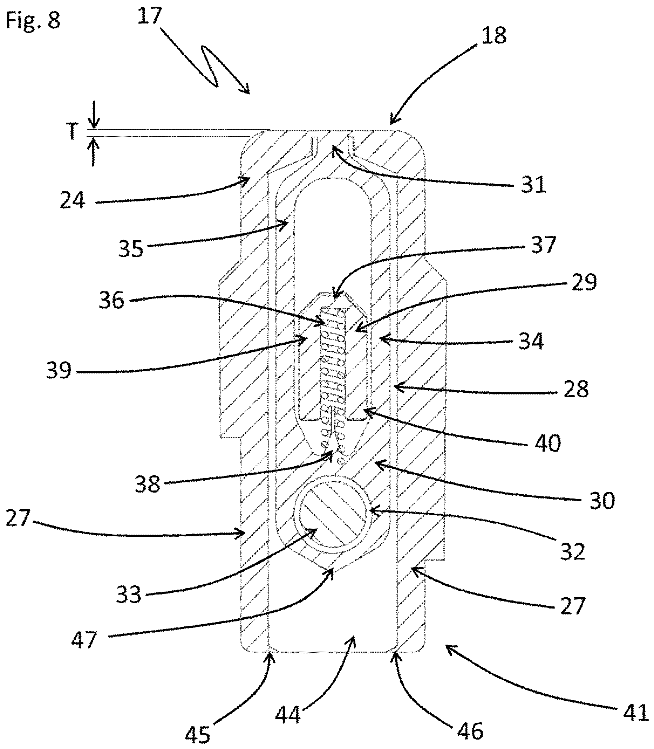

Das Verschleißindikatorelement 17 ist in den Figuren 6 bis 8 im Detail dargestellt. Das Verschleißindikatorelement 17 weist ein erstes Ende 18 auf, auf das die Verschleißkraft wirkt. Das erste Ende 18 ist im ursprünglichen Zustand plan mit der Verschleißfläche 19 des Gleitblocks 9 angeordnet. Da das Kunststoffmaterial, aus dem das Verschleißindikatorelement 17 gefertigt ist, ein ähnliches Abriebverhalten wie das Verschleißmaterial 12 aufweist, wird das erste Ende 18 gleichmäßig mit der Oberfläche des Gleitblocks 9 abgetragen.

Das erste Ende 18 ist Teil des Rahmens 24 des Verschleißindikatorelements 17, der aus Boden 25, Deckel 26 und den Seitenwänden 27 gebildet ist. Der Rahmen bildet einen Innenraum 28, in dem ein Federhalter 29 angeordnet ist. Außerdem ist in dem Innenraum 28 ein Magnetträger 30 mit einer Magnetaufnahme 32 in Form einer Ausnehmung mit einem Magneten 33 angeordnet, der lediglich über einen Sollbruchabschnitt 31 im Bereich des ersten Endes 18 mit dem Rahmen 24 verbunden ist. Der Magnetträger weist zwei Arme 34, 35 auf, die den Federhalter 29 umfassen und mit dem Sollbruchabschnitt 31 verbunden sind. Der Federhalter 29 befindet sich daher zwischen dem Sollbruchabschnitt 31 und der Magnetaufnahme 32.

Erreicht der Verschleiß des Verschleißindikatorelement 17 den Sollbruchabschnitt 31, wird die Verbindung zwischen Rahmen 24 und Magnetträger 30 gelöst und der Magnetträger 30 kann sich in dem Innenraum 28 bewegen.

Zwischen dem Federhalter 29 und der Magnetaufnahme 32 des Magnetträgers 30 befindet sich ein im ursprünglichen Zustand vorgespanntes Federelement 36, hier als Spiralfeder ausgeführt. Das Federelement 36 stützt sich mit seinem in Federkraftrichtung betrachtet ersten Ende an einem Widerlager 37 des Federhalters 29 und mit seinem zweiten Ende an einem Widerlager 38 des Magnetträgers 30 ab. Das Widerlager 37 des Federhalters 29 ist in diesem Beispiel als einfacher Anschlag ausgeführt. Das Widerlager 38 des Magnetträgers 30 ist als Vorsprung oder Dorn ausgebildet, auf den die Spiralfeder gesteckt ist.

Wenn der Sollbruchabschnitt 31 bricht, kann sich das Federelement 36 entspannen und drückt den frei beweglichen Magnetträger 30 von dem Federhalter 29 weg und gibt dem Magnetträger 30 somit eine Bewegungsrichtung vor.

Damit das Federelement 36 im ursprünglichen Zustand an seinem Platz bleibt und bei seiner Entspannung geführt wird, sind an dem Federhalter 29 Leitelemente 30, 40 vorgesehen, zwischen denen das Federelement 36 angeordnet ist und die sich in einer Richtung von dem ersten Ende 18 zu dem zweiten Ende 41 des Verschleißindikatorelements 17 erstrecken. Die Leitelemente 39, 40 bilden mit Boden 25 und Deckel 26 einen länglichen Raum, in dem sich das Federelement 36 in einer Vorzugsrichtung entspannen kann.

Das Verschleißindikatorelement 17 ist in die Tasche 16 eingeschoben. Es weist zwei Vorsprünge 42, 43 auf, die dabei in entsprechende Nuten der Tasche 16 eingreifen, so dass das Verschleißindikatorelement 17 einfach eingeführt und an der richtigen Stelle positioniert werden kann. Bei dem hier dargestellten Verschleißindikatorelement 17 ist der Deckel 26 nur in dem Abschnitt des Verschleißindikatorelements 17 vorhanden, der über die Tasche 16 hinausragt. Mehr ist nicht notwendig, da die Innenwand der Tasche 16 den Innenraum 28 des Verschleißindikatorelements 17 abdeckt. Dadurch wird Material eingespart und der Produktionsprozess verkürzt.

Im vorliegenden Ausführungsbeispiel sind Verschleißindikatorelement 17 und Magnetfeldsensor 23 so angeordnet, dass sich der Magnet 33 im ursprünglichen Zustand stets in der Nähe des Magnetfeldsensors 23 befindet. Dadurch, dass sich der Magnet 33 immer im Messbereich des Magnetfeldsensors 23 befindet, gibt dieser ein konstantes Signal an eine nicht näher dargestellte Steuerung ab. Wird die vorgesehene Verschleißtiefe T erreicht, wodurch der Sollbruchabschnitt 31 bricht, treibt das Federelement 36 den Magneten 33 aus dem Sensorbereich und der Magnetfeldsensor 23 gibt kein Signal mehr aus. Die Steuerung teilt daraufhin dem Bedienpersonal des Abfallsammelfahrzeugs mit, dass der betreffende Gleitblock beziehungsweise dessen Verschleißmaterial ausgetauscht werden muss. Aber auch andere Fehler wie zum Beispiel ein Bruch des Kabels oder eine lockere Steckerverbindung können so identifiziert werden.

Die Dicke des Rahmens 24 im Bereich des Sollbruchabschnitts 31 gibt vor, bei welcher Verschleißtiefe T das Verschleißindikatorelement 17 ausgelöst wird. So kann das Verschleißindikatorelement 17 auf unterschiedliche Verschleißbauteile angepasst werden. Beziehungsweise kann so auch der Zeitpunkt, wann das Verschleißindikatorelement 17 ausgelöst wird, und damit der Zeitpunkt der Wartung vorgegeben werden.

Der Magnetträger 30 wird getrieben durch die Federkraft in den Aufnahmeraum 44 des Verschleißindikatorelements 17, der ein Teil des Innenraums 28 ist, befördert. Im Bereich des zweiten Endes 41 des Verschleißindikatorelements 17 sind an den Seitenwänden 27 Führungselemente 45, 46 in Form von in den Aufnahmeraum 44 ragenden Vorsprüngen angeordnet, die mit dem spitz zulaufenden freien Ende 47 des Magnetträgers 30 zusammenwirken. Dadurch wird der Magnetträger 30 in seiner federkraftgetriebenen Bewegung geführt und aus dem Messbereich des Magnetfeldsensors 23 bewegt und ein Verrutschen oder Verklemmen wird vermieden. Dadurch wird gewährleistet, dass ein eindeutiges Messignal generiert wird.

Das Verschleißindikatorelement 17 wird einem additiven Fertigungsverfahren materialeinheitlich, einstückig hergestellt. Dabei wird an der Position, wo sich später das Federelement 36 befindet, ein Ersatzelement vorgesehen. Das Ersatzelement erstreckt sich vom Widerlager 37 des Federhalters 29 der Magnetaufnahme 32. Dieses Ersatzelement wird nach Fertigstellung des Verschleißindikatorelements 17 aus diesem herausgelöst, beispielsweise herausgebrochen. Dann wird das vorgespannte Federelement 36 an dessen Stelle eingesetzt.

### Bezugszeichen

- 1: Heckteil
- 2: Einschüttöffnung
- 3: Ladewanne
- 4: Kompaktierungsmechanismus
- 5: Trägerplatte
- 6: Pressplatte
- 7: Welle
- 8: Gleitschiene
- 9: Gleitblock
- 10: Gleitblock
- 11: Kern
- 12: Verschleißmaterial
- 13: Verschleißmaterial
- 14: Trägerelement
- 15: Träger
- 16: Tasche
- 17: Verschleißindikatorelement
- 18: erstes Ende von 17
- 19: Verschleißfläche von 12
- 20: Verschleißfläche von 12
- 21: Ausnehmung von 9
- 22: Durchgangsbohrung
- 23: Magnetfeldsensor
- 24: Rahmen
- 25: Boden von 24
- 26: Deckel von 24
- 27: Seitenwand von 24
- 28: Innenraum
- 29: Federhalter
- 30: Magnetträger
- 31: Sollbruchabschnitt
- 32: Magnetaufnahme
- 33: Magnet
- 34: Arm von 30
- 35: Arm von 30
- 36: Federelement
- 37: Widerlager von 29
- 38: Widerlager von 30
- 39: Leitelement
- 40: Leitelement
- 41: zweites Ende von 17
- 42: Vorsprung
- 43: Vorsprung
- 44: Aufnahmeraum
- 45: Führungselement
- 46: Führungselement
- 47: freies Ende von 30
- 48: Kabel
- T: Verschleißtiefe

## Patentansprüche

1. Verschleißindikatorelement (17) mit einem ersten Ende (18), auf das eine Verschleißkraft wirkt, und einem dem gegenüberliegenden zweiten Ende (41), aufweisend einen Rahmen (24) mit einem Innenraum (28), wobei in dem Innenraum (28) ein Magnetträger (30) angeordnet ist, der über einen Sollbruchabschnitt (31) mit dem ersten Ende (18) verbunden ist, und wobei in dem Innenraum (28) ein Federhalter (29) angeordnet ist und zwischen dem Federhalter (29) und dem Magnetträger (30) ein Federelement (36) angeordnet ist, das sich bei intaktem Sollbruchabschnitt (31) in einem vorgespannten Zustand befindet.

2. Verschleißindikatorelement (17) nach Anspruch 1 **dadurch gekennzeichnet, dass** die Breite des Rahmens (24) zwischen dem ersten Ende (18) und dem Sollbruchabschnitt (31) der Verschleißtiefe T entspricht.

3. Verschleißindikatorelement (17) nach Anspruch 1 oder 2 **dadurch gekennzeichnet, dass** der Federhalter (29) zwei Leitelemente (39) aufweist, zwischen denen das Federelement (36) angeordnet ist und die sich in einer Richtung von dem ersten Ende (18) zu dem zweiten Ende (41) erstrecken.

4. Verschleißindikatorelement (17) nach zumindest einem der vorstehenden Ansprüche **dadurch gekennzeichnet, dass** der Magnetträger (30) zumindest einen Arm (34,35) aufweist, der mit einem ersten Ende (18) mit dem Sollbruchabschnitt (31) verbunden ist und mit einem zweiten Ende (41) mit einer Magnetaufnahme (32) des Magnetträgers (30) verbunden ist.

5. Verschleißindikatorelement (17) nach Anspruch 4 **dadurch gekennzeichnet, dass** der oder die Arme (34,35) den Federhalter (29) umfassen.

6. Verschleißindikatorelement (17) nach zumindest einem der vorstehenden Ansprüche **dadurch gekennzeichnet, dass** der Federhalter (29) und der Magnetträger (30) jeweils ein Widerlager (37,38) aufweisen, an denen das Federelement (36) angeordnet ist.

7. Verschleißindikatorelement (17) nach zumindest einem der vorstehenden Ansprüche **dadurch gekennzeichnet, dass** der Rahmen (24), der Magnetträger (30) und der Federhalter (29) materialeinheitlich, einstückig gefertigt sind.

8. Verschleißindikatorelement (17) nach zumindest einem der vorstehenden Ansprüche **dadurch gekennzeichnet, dass** der Innenraum (28) einen Aufnahmeraum (44) aufweist, in den der Magnetträger (30) bei zerstörtem Sollbruchabschnitt (31) bewegbar ist.

9. Verschleißindikatorelement (17) nach Anspruch 8 **dadurch gekennzeichnet, dass** der Aufnahmeraum (44) Führungselemente (45,46) aufweist, die mit komplementären Ausformungen des freien Endes (47) des Magnetträgers (30) zusammenwirken, so dass dieser an die vorgesehene Position im Aufnahmeraum (44) bewegbar ist.

10. Verschleißindikatoranordnung mit einem Verschleißbauteil, das eine Tasche (16) aufweist, in der ein Verschleißindikatorelement (17) nach zumindest einem der vorstehenden Ansprüche angeordnet ist, so dass dessen erstes Ende (18) in oder an der Verschleißfläche (19,20) des Verschleißbauteils angeordnet ist, sowie einem nahe dem Verschleißindikatorelement (17) angeordneten Magnetfeldsensor (23).

11. Verschleißindikatoranordnung nach Anspruch 10 **dadurch gekennzeichnet, dass** das erste Ende (18) des Verschleißindikatorelements (17) im Wesentlichen plan mit der Verschleißfläche (19,20) angeordnet ist.

12. Verschleißindikatoranordnung nach Anspruch 10 oder 11 **dadurch gekennzeichnet, dass** der Magnetfeldsensor (23) so angeordnet ist, dass sich der Magnetträger (30) im Erfassungsbereich des Magnetfeldsensors (23) befindet.

13. Verschleißindikatoranordnung nach zumindest einem der Ansprüche 10 bis 12 **dadurch gekennzeichnet, dass** das Verschleißbauteil einen Kern (11) aus einem metallischen Material aufweist der zumindest abschnittsweise von einem Verschleißmaterial (12,13) umgeben ist.

14. Verschleißindikatoranordnung nach zumindest einem der Ansprüche 10 bis 13 **dadurch gekennzeichnet, dass** der Magnetfeldsensor (23) in einem weiteren, mit dem Verschleißbauteil zusammenwirkenden Bauteil angeordnet ist.

15. Verschleißindikatoranordnung nach Anspruch 14 **dadurch gekennzeichnet, dass** das Verschleißbauteil ein Gleitblock (9,10) und das weitere Bauteil eine mit dem Gleitblock (9,10) verbundene Welle (7) ist.

## Claims

1. Wear indicator element (17) comprising a first end (18) on which a wear force acts and a second end (41) opposite the first end, and the wear indicator element having a frame (24) which has an interior (28), wherein a magnet carrier (30) is arranged in the interior (28) and connected to the first end (18) via a predetermined breaking portion (31), and wherein a spring holder (29) is arranged in the interior (28) and a spring element (36) is arranged between the spring holder (29) and the magnet carrier (30), which spring element is in a preloaded state when the predetermined breaking portion (31) is intact.

2. Wear indicator element (17) according to claim 1, **characterized in that** the width of the frame (24) between the first end (18) and the predetermined breaking portion (31) corresponds to the wear depth T.

3. Wear indicator element (17) according to claim 1 or 2, **characterized in that** the spring holder (29) has two guide elements (39) between which the spring element (36) is arranged and which extend in one direction from the first end (18) to the second end (41).

4. Wear indicator element (17) according to at least one of the preceding claims, **characterized in that** the magnet carrier (30) has at least one arm (34, 35) which is connected at a first end (18) to the predetermined breaking portion (31) and at a second end (41) to a magnet receptacle (32) of the magnet carrier (30).

5. Wear indicator element (17) according to claim 4, **characterized in that** the arm(s) (34, 35) encompass the spring holder (29).

6. Wear indicator element (17) according to at least one of the preceding claims, **characterized in that** the spring holder (29) and the magnet carrier (30) each have an abutment (37, 38) on which the spring element (36) is arranged.

7. Wear indicator element (17) according to at least one of the preceding claims, **characterized in that** the frame (24), the magnet carrier (30) and the spring holder (29) are made of a single material and in one piece.

8. Wear indicator element (17) according to at least one of the preceding claims, **characterized in that** the interior (28) has a receiving space (44) into which the magnet carrier (30) can be moved when the predetermined breaking portion (31) is destroyed.

9. Wear indicator element (17) according to claim 8, **characterized in that** the receiving space (44) has guide elements (45, 46) which interact with complementary shapes of the free end (47) of the magnet carrier (30) so that the magnet carrier can be moved to the intended position in the receiving space (44).

10. Wear indicator arrangement comprising a wear component, which has a pocket (16) in which a wear indicator element (17) according to at least one of the preceding claims is arranged such that a first end (18) of said wear indicator element is arranged in or on the wear surface (19, 20) of the wear component, and comprising a magnetic field sensor (23) arranged near the wear indicator element (17).

11. Wear indicator arrangement according to claim 10, **characterized in that** the first end (18) of the wear indicator element (17) is arranged substantially planar with the wear surface (19, 20).

12. Wear indicator arrangement according to claim 10 or 11, **characterized in that** the magnetic field sensor (23) is arranged such that the magnet carrier (30) is located in the detection range of the magnetic field sensor (23).

13. Wear indicator arrangement according to at least one of claims 10 to 12, **characterized in that** the wear component has a core (11) which is made of a metal material and surrounded, at least in portions, by a wear material (12, 13).

14. Wear indicator arrangement according to at least one of claims 10 to 13, **characterized in that** the magnetic field sensor (23) is arranged in an additional component which interacts with the wear component.

15. Wear indicator arrangement according to claim 14, **characterized in that** the wear component is a sliding block (9, 10) and the additional component is a shaft (7) connected to the sliding block (9, 10).

## Revendications

1. Élément indicateur d'usure (17), comportant une première extrémité (18) sur laquelle agit une force d'usure et une seconde extrémité (41) opposée à celle-ci, présentant un cadre (24) comportant un espace intérieur (28), dans lequel est disposé, dans l'espace intérieur (28), un porte-aimant (30) relié à la première extrémité (18) par l'intermédiaire d'une section de rupture cible (31), et dans lequel un dispositif de maintien de ressort (29) est disposé dans l'espace intérieur (28) et un élément formant ressort (36) est disposé entre le dispositif de maintien de ressort (29) et le porte-aimant (30), lequel élément formant ressort se trouve dans un état précontraint lorsque la section de rupture cible (31) est intacte.

2. Élément indicateur d'usure (17) selon la revendication 1, **caractérisé en ce que** la largeur du cadre (24) entre la première extrémité (18) et la section de rupture cible (31) correspond à la profondeur d'usure T.

3. Élément indicateur d'usure (17) selon la revendication 1 ou 2, **caractérisé en ce que** le dispositif de maintien de ressort (29) présente deux éléments conducteurs (39) entre lesquels est disposé l'élément formant ressort (36) et qui s'étendent dans une direction allant de la première extrémité (18) à la seconde extrémité (41).

4. Élément indicateur d'usure (17) selon au moins l'une des revendications précédentes, **caractérisé en ce que** le porte-aimant (30) présente au moins un bras (34, 35) qui est relié, par une première extrémité (18), à la section de rupture cible (31) et, par une seconde extrémité (41), à un logement d'aimant (32) du porte-aimant (30).

5. Élément indicateur d'usure (17) selon la revendication 4, **caractérisé en ce que** le ou les bras (34, 35) entourent le dispositif de maintien de ressort (29).

6. Élément indicateur d'usure (17) selon au moins l'une des revendications précédentes, **caractérisé en ce que** le dispositif de maintien de ressort (29) et le porte-aimant (30) présentent respectivement une butée (37, 38) contre laquelle est disposé l'élément formant ressort (36).

7. Élément indicateur d'usure (17) selon au moins l'une des revendications précédentes, **caractérisé en ce que** le cadre (24), le porte-aimant (30) et le dispositif de maintien de ressort (29) sont fabriqués d'un seul tenant, dans un même matériau.

8. Élément indicateur d'usure (17) selon au moins l'une des revendications précédentes, **caractérisé en ce que** l'espace intérieur (28) présente un espace de réception (44) dans lequel le porte-aimant (30) peut être déplacé lorsque la section de rupture cible (31) est détruite.

9. Élément indicateur d'usure (17) selon la revendication 8, **caractérisé en ce que** l'espace de réception (44) présente des éléments de guidage (45, 46) qui coopèrent avec des protubérances complémentaires de l'extrémité libre (47) du porte-aimant (30), de sorte que celui-ci peut être déplacé vers la position prévue dans l'espace de réception (44).

10. Dispositif indicateur d'usure comportant un composant d'usure et qui présente une poche (16) dans laquelle est disposé un élément indicateur d'usure (17) selon au moins l'une des revendications précédentes, de sorte que sa première extrémité (18) est disposée dans ou contre la surface d'usure (19, 20) du composant d'usure, ainsi qu'un capteur de champ magnétique (23) disposé à proximité de l'élément indicateur d'usure (17).

11. Dispositif indicateur d'usure selon la revendication 10, **caractérisé en ce que** la première extrémité (18) de l'élément indicateur d'usure (17) est disposée de manière sensiblement plane par rapport à la surface d'usure (19, 20).

12. Dispositif indicateur d'usure selon la revendication 10 ou 11, **caractérisé en ce que** le capteur de champ magnétique (23) est disposé de sorte que le porte-aimant (30) se trouve dans la zone de détection du capteur de champ magnétique (23).

13. Dispositif indicateur d'usure selon au moins l'une des revendications 10 à 12, **caractérisé en ce que** le composant d'usure présente un noyau (11) en matériau métallique qui est encerclé, au moins dans certaines sections, par un matériau d'usure (12, 13).

14. Dispositif indicateur d'usure selon au moins l'une des revendications 10 à 13, **caractérisé en ce que** le capteur de champ magnétique (23) est disposé dans un autre composant coopérant avec le composant d'usure.

15. Dispositif indicateur d'usure selon la revendication 14, **caractérisé en ce que** le composant d'usure est un bloc coulissant (9, 10) et l'autre composant est un arbre (7) relié au bloc coulissant (9, 10).
